# EUROPEAN PATENT APPLICATION

(11) **EP 4 404 303 A1**
(43) Date of publication of application: **24.07.2024**
(21) Application number: 22867097.2
(22) Date of filing: 26.07.2022
(51) Int. Cl.: H01M 4/525, H01M 4/36, H01M 4/62

(54) **COATED ACTIVE MATERIAL, METHOD FOR PRODUCING COATED ACTIVE MATERIAL, POSITIVE ELECTRODE MATERIAL AND BATTERY**

(30) Priority: 13.09.2021 JP 2021148737
(71) Applicant: Panasonic Intellectual Property Management Co., Ltd., Kadoma-shi, Osaka 571-0057 (JP)
(72) Inventor: FUJINOKI, Norihito, Kadoma-shi, Osaka 571-0057 (JP)
(74) Representative: Eisenführ Speiser
(86) International application number: PCT/JP2022/028825
(87) International publication number: WO 2023/037775

(57) **Abstract**

A coated active material 100 of the present disclosure includes a positive electrode active material 11 and a coating layer 12 coating at least a portion of a surface of the positive electrode active material 11. The coating layer 12 includes a lithium-containing fluoride. When a moisture content A₃₀₀ of the positive electrode active material 11 from 25°C to 300°C is measured by a Karl Fischer method, the moisture content A₃₀₀ is more than 0 ppm and less than 250 ppm per unit mass of the positive electrode active material 11. A method for producing the coated active material 100 of the present disclosure includes: drying the positive electrode active material 11 so that when the moisture content A₃₀₀ of the positive electrode active material 11 from 25°C to 300°C is measured by the Karl Fischer method, the moisture content A₃₀₀ is more than 0 ppm and less than 250 ppm per unit mass of the positive electrode active material 11; and, after the drying, coating at least a portion of the surface of the positive electrode active material 11 with a coating material including a lithium-containing fluoride.

## Description

### TECHNICAL FIELD

The present disclosure relates to a coated active material, a method for producing a coated active material, a positive electrode material, and a battery.

### BACKGROUND ART

Patent Literature 1 discloses a positive electrode material including a positive electrode active material and a halide solid electrolyte. Patent Literature 1 discloses, as the halide solid electrolyte, a solid electrolyte including lithium, yttrium, and at least one selected from the group consisting of chlorine, bromine, and iodine.

Patent Literature 2 discloses a positive electrode material including a positive electrode active material whose surface is coated with a coating material and a solid electrolyte. Patent Literature 2 discloses, as the coating material, a halide solid electrolyte including lithium, yttrium, and chlorine and/or bromine.

### CITATION LIST

### Patent Literature

Patent Literature 1: WO 2019/135322 A1
Patent Literature 2: WO 2019/146236 A1

### SUMMARY OF INVENTION

### Technical Problem

The present disclosure provides a coated active material that can reduce the output resistance of a battery.

### Solution to Problem

A coated active material according to one aspect of the present disclosure includes:
a positive electrode active material; and
a coating layer coating at least a portion of a surface of the positive electrode active material, wherein
the coating layer includes a lithium-containing fluoride, and
when a moisture content of the positive electrode active material from 25°C to 300°C is measured by a Karl Fischer method, the moisture content is more than 0 ppm and less than 250 ppm per unit mass of the positive electrode active material.

### Advantageous Effects of Invention

According to the present disclosure, it is possible to reduce the output resistance of a battery.

### BRIEF DESCRIPTION OF DRAWINGS

FIG. 1 is a cross-sectional view schematically showing the configuration of a coated active material of Embodiment 1.
FIG. 2 is a flowchart showing a method for producing the coated active material of Embodiment 1.
FIG. 3 is a cross-sectional view schematically showing the configuration of a positive electrode material of Embodiment 2.
FIG. 4 is a cross-sectional view schematically showing the configuration a battery of Embodiment 3.

### DESCRIPTION OF EMBODIMENTS

Embodiments of the present disclosure will be described below with reference to the drawings.

The following descriptions are each a generic or specific example. The numerical values, composition, shape, thickness, electrical properties, structure of secondary batteries, electrode materials, etc., shown below are illustrative, and are not intended to limit the present disclosure. In addition, the components that are not recited in the independent claims representing the broadest concepts are optional components.

### (Findings on which the present disclosure is based)

Patent Literature 1 describes a positive electrode material including a positive electrode active material and a halide solid electrolyte including lithium, yttrium, and at least one selected from the group consisting of chlorine, bromine, and iodine.

On the other hand, according to the findings by the present inventor as a result of intensive studies, a battery using a positive electrode material including a halide solid electrolyte is subjected to oxidative decomposition of the halide solid electrolyte during charge. The oxidative decomposition product serves as a resistance layer to increase the internal resistance of the battery during charge. The increase in the internal resistance of the battery during charge is inferred to be due to an oxidation reaction of at least one element selected from the group consisting of chlorine, bromine, and iodine included in the halide solid electrolyte.

Patent Literature 2 describes a battery using a positive electrode active material whose surface is at least partially coated with a halide solid electrolyte including lithium, yttrium, chlorine, and/or bromine. As in Patent Literature 1, the battery described in Patent Literature 2 also has a problem with the oxidation resistance of the halide solid electrolyte including chlorine and/or bromine.

Here, the present inventor has found that a battery using a positive electrode active material coated with a material including a lithium-containing fluoride exhibits an excellent oxidation resistance. Such a positive electrode active material can suppress an increase in the internal resistance of a battery during charge. Although not yet been elucidated, the details of the mechanism are inferred as follows. Since fluorine has the highest electronegativity among the halogen elements, fluorine is strongly bonded to a cation. Consequently, a lithium-containing fluoride is less prone to the progress of an oxidation reaction of fluorine, that is, a side reaction in which electrons are extracted from fluorine. Therefore, a resistance layer due to oxidative decomposition is less prone to be generated.

On the other hand, the present inventor has made a study of the output resistance of a battery using a positive electrode active material coated with a material including a lithium-containing fluoride. As a result, the present inventor has found a problem of a high output resistance during discharge. Although not yet been elucidated, the details of the mechanism are inferred as follows. A positive electrode active material can contain, as its moisture, physically adsorbed moisture and chemically bonded moisture such as water of crystallization. In coating a positive electrode active material with a material including a lithium-containing fluoride, such moisture contained in the positive electrode active material and the lithium-containing fluoride react with each other, which can deteriorate a portion of the coating layer including the lithium-containing fluoride. The deterioration of the coating layer generates a resistance layer at the interface between the positive electrode active material and the coating layer. This resistance layer increases the internal resistance of the battery during charge and discharge.

From these findings, the present inventor has come to conceive of the technique of the present disclosure.

### (Overview of one aspect according to the present disclosure)

A coated active material according to a first aspect of the present disclosure includes:
a positive electrode active material; and
a coating layer coating at least a portion of a surface of the positive electrode active material, wherein
the coating layer includes a lithium-containing fluoride, and
when a moisture content of the positive electrode active material from 25°C to 300°C is measured by a Karl Fischer method, the moisture content is more than 0 ppm and less than 250 ppm per unit mass of the positive electrode active material.

The coated active material according to the first aspect can reduce the output resistance of a battery.

In a second aspect of the present disclosure, for example, in the coated active material according to the first aspect, the lithium-containing fluoride may include Li, Me, Al, and F, and the Me may be at least one selected from the group consisting of Ti and Zr.

The coated active material according to the second aspect can have an enhanced ionic conductivity of the lithium-containing fluoride. Therefore, the output resistance of a battery can be further reduced.

In a third aspect of the present disclosure, for example, in the coated active material according to the first or second aspect, the lithium-containing fluoride may be represented by the following composition formula (1)

Li_{α}Me_{β}Al_{γ}F₆ ... Formula (1),

the Me may be at least one selected from the group consisting of Ti and Zr, and the α, the β, and the γ may satisfy α + 4β + 3γ = 6 and γ > 0.

The coated active material according to the third aspect can have an enhanced ionic conductivity of the lithium-containing fluoride. Therefore, the output resistance of a battery can be further reduced.

In a fourth aspect of the present disclosure, for example, in the coated active material according to the third aspect, the γ may satisfy 0.5 ≤ γ < 1.

The coated active material according to the fourth aspect can have an enhanced ionic conductivity of the lithium-containing fluoride. Therefore, the output resistance of a battery can be further reduced.

In a fifth aspect of the present disclosure, for example, in the coated active material according to the third aspect, the α, the β, and the γ may satisfy 2.5 ≤ α ≤ 2.9, 0.1 ≤ β ≤ 0.5, and 0.5 ≤ γ ≤ 0.9.

The coated active material according to the fifth aspect can have an enhanced ionic conductivity of the lithium-containing fluoride. Therefore, the output resistance of a battery can be further reduced.

In a sixth aspect of the present disclosure, for example, in the coated active material according to any one of the first to fifth aspects, the positive electrode active material may include lithium nickel cobalt aluminum oxide.

The coated active material according to the sixth aspect can increase the energy density of a battery.

A method for producing a coated active material according to a seventh aspect of the present disclosure includes:
drying a positive electrode active material so that when a moisture content of the positive electrode active material from 25°C to 300°C is measured by a Karl Fischer method, the moisture content is more than 0 ppm and less than 250 ppm per unit mass of the positive electrode active material; and
after the drying, coating at least a portion of a surface of the positive electrode active material with a coating material including a lithium-containing fluoride.

According to the production method of the seventh aspect, it is possible to produce a coated active material that can reduce the output resistance of a battery.

In an eighth aspect of the present disclosure, for example, the method according to the seventh aspect may include, between the drying and the coating, measuring the moisture content of the positive electrode active material from 25°C to 300°C by the Karl Fischer method.

According to the production method of the eighth aspect, it is possible to efficiently produce a coated active material that can reduce the output resistance of a battery.

In a ninth aspect of the present disclosure, for example, the method according to the eighth aspect may include, between the measuring and the coating, judging whether the moisture content is more than 0 ppm and less than 250 ppm per unit mass of the positive electrode active material.

According to the production method of the ninth aspect, it is possible to efficiently produce a coated active material that can reduce the output resistance of a battery.

In a tenth aspect of the present disclosure, for example, in the method according to any one of the seventh to ninth aspects, the coating may be performed by a dry particle composing method, and the dry particle composing method may include imparting a mechanical energy to a mixture of the positive electrode active material and the coating material, the mechanical energy being generated by impact, compression, and shear.

According to the production method of the tenth aspect, it is possible to more efficiently produce a coated active material that can reduce the output resistance of a battery.

A positive electrode material according to an eleventh aspect of the present disclosure includes:
the coated active material according to any one of the first to sixth aspects; and
a first solid electrolyte.

The positive electrode material according to the eleventh aspect can reduce the output resistance of a battery.

In a twelfth aspect of the present disclosure, for example, in the positive electrode material according to the eleventh aspect, the first solid electrolyte may include a halide solid electrolyte.

The positive electrode material according to the twelfth aspect can enhance the output characteristics of a battery.

In a thirteenth aspect of the present disclosure, for example, in the positive electrode material according to the eleventh or twelfth aspect, the first solid electrolyte may include a sulfide solid electrolyte.

The positive electrode material according to the thirteenth aspect can further enhance the output characteristics of a battery.

A battery according to a fourteenth aspect of the present disclosure includes:
a positive electrode including the positive electrode material according to any one of the eleventh to thirteenth aspects;
a negative electrode; and
an electrolyte layer provided between the positive electrode and the negative electrode.

The battery according to the fourteenth aspect can have a reduced output resistance.

In a fifteenth aspect of the present disclosure, for example, in the battery according to the fourteenth aspect, the electrolyte layer may include a second solid electrolyte, and the second solid electrolyte may include a halide solid electrolyte having the same composition as composition of a solid electrolyte included in the first solid electrolyte.

The battery according to the fifteenth aspect can have enhanced output characteristics.

In a sixteenth aspect of the present disclosure, for example, in the battery according to the fourteenth or fifteenth aspect, the electrolyte layer may include a second solid electrolyte, and the second solid electrolyte may include a halide solid electrolyte having composition different from composition of a solid electrolyte included in the first solid electrolyte.

The battery according to the sixteenth aspect can have enhanced output characteristics.

In the seventeenth aspect of the present disclosure, for example, in the battery according to any one of the fourteenth to sixteenth aspects, the electrolyte layer may include a second solid electrolyte, and the second solid electrolyte may include a sulfide solid electrolyte.

The battery according to the seventeenth aspect can have further enhanced output characteristics.

### (Embodiment 1)

### [Coated active material]

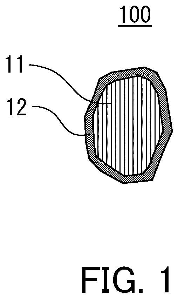

FIG. 1 is a cross-sectional view schematically showing the configuration of a coated active material of Embodiment 1. A coated active material 100 of Embodiment 1 includes a positive electrode active material 11 and a coating layer 12. The coating layer 12 coats at least a portion of the surface of the positive electrode active material 11. The coating layer 12 is in direct contact with the positive electrode active material 11. The coating layer 12 includes a lithium-containing fluoride. When a moisture content A₃₀₀ of the positive electrode active material 11 from 25°C to 300°C is measured by the Karl Fischer method, the moisture content A₃₀₀ is more than 0 ppm and less than 250 ppm per unit mass of the positive electrode active material 11.

The positive electrode active material 11 can contain, as its moisture, physically adsorbed moisture and chemically bonded moisture such as water of crystallization. According to the Karl Fischer method, it is possible to measure the mass of such moisture, that is, the moisture content, contained in the positive electrode active material 11. In the coated active material 100, the moisture content A₃₀₀ of the positive electrode active material 11 from 25°C to 300°C is controlled within the above range. This suppresses, in coating the surface of the positive electrode active material 11 with the coating layer 12, deterioration of the coating layer 12 due to a reaction between the moisture contained in the positive electrode active material 11 and the lithium-containing fluoride included in the coating layer 12. That is, generation of a resistance layer at the interface between the positive electrode active material 11 and the coating layer 12 due to deterioration of the coating layer 12 is suppressed. Therefore, the coated active material 100 can reduce the output resistance of a battery.

In the present disclosure, the "moisture content A₃₀₀ of the positive electrode active material 11 from 25°C to 300°C" means the cumulative moisture content, as measured by the Karl Fischer method, during a temperature rise of the positive electrode active material 11 from 25°C to 300°C. The same applies to moisture content in other temperature ranges.

The moisture content A₃₀₀ of the positive electrode active material 11 from 25°C to 300°C may be more than 0 ppm and 200 ppm or less per unit mass of the positive electrode active material 11. The moisture content A₃₀₀ of the positive electrode active material 11 from 25°C to 300°C may be more than 0 ppm and less than 150 ppm per unit mass of the positive electrode active material 11. According to such a configuration, the output resistance of a battery can be further reduced.

The moisture content of the positive electrode active material 11 can be determined as follows with a Karl Fischer apparatus (Karl Fischer moisture meter).

In a dry nitrogen gas atmosphere, the introduction portion for the positive electrode active material 11 that is a measurement sample (hereinafter simply referred to as a measurement sample) is preheated to 300°C for stabilization of the apparatus.

After the apparatus becomes stabilized, the temperature of the introduction portion is set at 120°C. When the temperature of the introduction portion reaches 120°C, a background moisture release amount B (µg/sec) is measured.

The temperature of the introduction portion is set at 25°C. When the temperature of the introduction portion reaches 25°C, the measurement sample is introduced into the introduction portion. The measurement sample is heated from 25°C to 120°C at a rate of temperature rise of 10°C per minute to vaporize the moisture contained in the measurement sample. The moisture vaporized is quantified by coulometric titration until the amount of the moisture vaporized reaches the background moisture release amount B or less. Thus, the moisture amount is determined. The moisture amount determined here by quantification is defined as "moisture content A₁ from 25°C to 120°C".

Subsequently, the measurement sample is heated from 120°C to 180°C at a rate of temperature rise of 10°C per minute to vaporize the moisture contained in the measurement sample. The moisture vaporized is quantified by coulometric titration until the amount of the moisture vaporized reaches the background moisture release amount B or less. Thus, the moisture amount is determined. The moisture amount determined here by quantification is defined as "moisture content A₂ from 120°C to 180°C".

The measurement sample is furthermore heated from 180°C to 300°C at a rate of temperature rise of 10°C per minute to vaporize the moisture contained in the measurement sample. The moisture vaporized is quantified by coulometric titration until the amount of the moisture vaporized reaches the background moisture release amount B or less. Thus, the moisture amount is determined. The moisture amount determined here by quantification is defined as "moisture content A₃ from 180°C to 300°C".

A "moisture content A₁₈₀ from 25°C to 180°C" can be determined as the cumulative moisture content of the moisture content A₁ and the moisture content A₂. The "moisture content A₃₀₀ from 25°C to 300°C" can be determined as the cumulative moisture content of the moisture content A₁₈₀ and the moisture content A₃.

In the present disclosure, the "positive electrode active material 11 that is a measurement sample" means the particle group of the positive electrode active material 11. Thus, the above moisture content determined by the Karl Fischer method means the moisture content of the particle group of the positive electrode active material 11. Accordingly, for example, the "moisture content A₁₈₀ of the positive electrode active material 11 from 25°C to 180°C" is synonymous with the moisture content of the particle group of the positive electrode active material 11 from 25°C to 180°C. The "moisture content A₃₀₀ of the positive electrode active material 11 from 25°C to 300°C" is synonymous with the moisture content of the particle group of the positive electrode active material 11 from 25°C to 300°C.

In the present disclosure, "ppm" means mass fraction, that is, wt ppm (mass/mass). Accordingly, for example, the phrase "the moisture content A₃₀₀ of the positive electrode active material 11 from 25°C to 300°C is more than 0 ppm and less than 250 ppm per unit mass of the positive electrode active material 11" means that the mass fraction determined by dividing the moisture content of the positive electrode active material 11 that is a measurement sample (the particle group of the positive electrode active material 11) from 25°C to 300°C by the total mass of the particle group of the positive electrode active material 11 is more than 0 ppm and less than 250 ppm.

### (Coating layer)

The material for the coating layer 12 is hereinafter referred to as a "coating material". The coated active material 100 includes the positive electrode active material 11 and a coating material. The coating material includes a lithium-containing fluoride.

The lithium-containing fluoride may consist of Li, F, and at least one selected from the group consisting of Zr, Ti, and Al. Examples of such a lithium-containing fluoride include Li₂ZrF₆, Li₃ZrF₇, Li₄ZrF₈, Li₃AlF₆, and Li₂TiF₆. According to such a configuration, the ionic conductivity of the lithium-containing fluoride can be enhanced. Therefore, the output resistance of a battery can be further reduced.

The lithium-containing fluoride may include Li, Me, Al, and F, and Me may be at least one selected from the group consisting of Ti and Zr. According to such a configuration, the ionic conductivity of the lithium-containing fluoride can be enhanced. Therefore, the output resistance of a battery can be further reduced.

The lithium-containing fluoride may consist of Li, Me, Al, and F, and Me may be at least one selected from the group consisting of Ti and Zr. "Consisting of Li, Me, Al, and F" means that no material other than Li, Me, Al, or F is intentionally added, except for unavoidable impurities. According to such a configuration, the ionic conductivity of the lithium-containing fluoride can be enhanced. Therefore, the output resistance of a battery can be further reduced.

The lithium-containing fluoride may be represented by the following composition formula (1).

Li_{α}Me_{β}Al_{γ}F₆ ... Formula (1)

In the composition formula (1), Me may be at least one selected from the group consisting of Ti and Zr, and α, β, and γ may satisfy α + 4β + 3γ = 6 and γ > 0. According to such a configuration, the ionic conductivity of the lithium-containing fluoride can be enhanced. Therefore, the output resistance of a battery can be further reduced.

In the composition formula (1), γ may satisfy 0.5 ≤ γ < 1. According to such a configuration, the ionic conductivity of the lithium-containing fluoride can be enhanced. Therefore, the output resistance of a battery can be further reduced.

In the composition formula (1), α, β, and γ may satisfy 2.5 ≤ α ≤ 2.9, 0.1 ≤ β ≤ 0.5, and 0.5 ≤ γ ≤ 0.9. According to such a configuration, the ionic conductivity of the lithium-containing fluoride can be enhanced. Therefore, the output resistance of a battery can be further reduced.

In the composition formula (1), Me may be Ti. In the composition formula (1), Me may be Zr. According to such a configuration, the ionic conductivity of the lithium-containing fluoride can be enhanced. Therefore, the output resistance of a battery can be further reduced.

The lithium-containing fluoride may be at least one selected from the group consisting of Li_{2.7}Ti_{0.3}Al_{0.7}F₆ and Li_{2.8}Zr_{0.2}Al_{0.8}F₆. According to such a configuration, the ionic conductivity of the lithium-containing fluoride can be enhanced. Therefore, the output resistance of a battery can be further reduced.

The lithium-containing fluoride is not limited to those strictly satisfying the composition formula (1), and encompasses even those including a trace amount of impurities in addition to the constituent elements represented by the composition formula (1). For example, the lithium-containing fluoride may include 10 mass% or less of impurities in addition to the constituent elements represented by the composition formula (1).

The coating material may include the lithium-containing fluoride as its main component. That is, the coating material may include the lithium-containing fluoride in a mass proportion of, for example, 50% or more in the entire coating layer 12.

The coating material may include the lithium-containing fluoride in a mass proportion of 70% or more in the entire coating layer 12.

The coating material may include the lithium-containing fluoride as its main component and further include unavoidable impurities, or a starting material for use in synthesizing the lithium-containing fluoride, a by-product, a decomposition product, etc.

The coating material may include the lithium-containing fluoride in a mass proportion of, for example, 100% in the entire coating layer 12, except for unavoidably incorporated impurities. As described above, the coating material may be composed only of the lithium-containing fluoride.

The coating material may be free of sulfur.

In the coated active material 100, the proportion of the volume of the coating layer 12 in the total of the volume of the positive electrode active material 11 and the volume of the coating layer 12 may be 1% or more and 10% or less. In other words, regarding a volume V1 of the positive electrode active material 11 and a volume V2 of the coating layer 12, the proportion, V2/(V1 + V2), of the volume V2 of the coating layer 12 in the total (V1 + V2) of the volume V1 of the positive electrode active material 11 and the volume V2 of the coating layer 12 may be 0.01 or more and 0.1 or less. In the case where the proportion of the volume of the coating layer 12 in the total of the volume of the positive electrode active material 11 and the volume of the coating layer 12 is 1% or more, the surface of the positive electrode active material 11 can be sufficiently coated with the coating layer 12. Therefore, it is possible to effectively suppress generation of a resistance layer between the positive electrode active material 11 and the coating layer 12. In the case where the proportion of the volume of the coating layer 12 in the total of the volume of the positive electrode active material 11 and the volume of the coating layer 12 is 10% or less, an excessive coating of the surface of the positive electrode active material 11 with the coating layer 12 can be avoided. Therefore, an electron conduction path between the particles of the positive electrode active material 11 is adequately ensured. The volume V1 of the positive electrode active material 11 means the total volume of the positive electrode active material 11 in the particle group of the coated active material 100. The volume V2 of the coating layer 12 means the total volume of the coating layer 12 in the particle group of the coated active material 100.

According to the above configuration, the output resistance of the battery can be further reduced.

The proportion of the volume of the coating layer 12 in the total of the volume of the positive electrode active material 11 and the volume of the coating layer 12 can be determined by, for example, the following manner. In a cross-sectional scanning electron microscope (SEM) image of the coated active material 100 captured with an SEM, the volume proportion is calculated for each of 20 pieces randomly selected and the average value is calculated. When the volume of the coated active material 100 is defined as V3 in addition to the volume V1 of the positive electrode active material 11 and the volume V2 of the coating layer 12, the volume V2 of the coating layer 12 is determined as V3 - V1. Therefore, the proportion of the volume of the coating layer 12 in the total of the volume of the positive electrode active material 11 and the volume of the coating layer 12 is determined as (V3 - V1)/V3.

The volume V1 of the positive electrode active material 11 can be calculated by the following method. In a cross-sectional SEM image, the contour of the positive electrode active material 11 is extracted to calculate the area of the positive electrode active material 11. For a circle having an area equivalent to the above area, a radius (equivalent circle diameter × 1/2) r1 is calculated. On the assumption that the positive electrode active material 11 is a true sphere having the radius r1, the volume V1 of the positive electrode active material 11 can be calculated from the radius r1. The volume V3 of the coated active material 100 can be calculated by the following method. In a cross-sectional SEM image, the contour of the coated active material 100 is extracted to calculate the area of the coated active material 100. For a circle having an area equivalent to the above area, a radius (equivalent circle diameter × 1/2) r3 is calculated. On the assumption that the coated active material 100 is a true sphere having the radius r3, the volume V3 of the coated active material 100 can be calculated from the radius r3. The volume V3 of the coated active material 100 can be calculated also by the following method. The radius r1 of the positive electrode active material 11 calculated from the cross-sectional SEM image and the average thickness of the coating layer 12 are added together, and this is assumed as the radius r3 of the coated active material 100. On the assumption that the coated active material 100 is a true sphere having the radius r3, the volume V3 of the coated active material 100 can be calculated from the equivalent circle diameter r3. The average thickness of the coating layer 12 can be determined by, for example, measuring the thicknesses of the coating layer 12 at 20 points randomly selected in a cross-sectional SEM image of the coated active material 100, and calculating the average value of the measured values.

The coating layer 12 may have an average thickness of 1 nm or more and 300 nm or less. In the case where the coating layer 12 has an average thickness of 1 nm or more, the surface of the positive electrode active material 11 can be sufficiently coated with the coating layer 12. Therefore, it is possible to efficiently suppress generation of a resistance layer between the positive electrode active material 11 and the coating layer 12. In the case where the coating layer 12 has an average thickness of 300 nm or less, an excessive coating of the surface of the positive electrode active material 11 with the coating layer 12 can be avoided. Therefore, an electron conduction path between the particles of the positive electrode active material 11 is adequately ensured.

According to the above configuration, the output resistance of a battery can be further reduced.

Coating the positive electrode active material 11 with the coating layer 12 suppresses generation of an oxide film due to oxidative decomposition of a different solid electrolyte (e.g., a first solid electrolyte 21 described later) during charge of a battery. Therefore, according to the above configuration, the coated active material 100 can reduce the output resistance of a battery.

The coated active material 100 is, for example, particulate. The particulate shape of the coated active material 100 is not particularly limited. The particulate shape of the coated active material 100 is an acicular, flaky, spherical, or ellipsoidal shape.

The types and amounts of substance of the elements included in the coated active material 100 can be determined by a known chemical analysis method.

### <Method for producing lithium-containing fluoride>

The lithium-containing fluoride included in the coating layer 12 can be produced by, for example, the following method.

Raw material powders are prepared so as to obtain the blending ratio of a target composition. For example, to produce Li_{2.7}Ti_{0.3}Al_{0.7}F₆, LiF, AlF₃, and TiF₄ are prepared in a molar ratio of 2.7:0.7:0.3. Moreover, the raw materials, the blending ratio, and the synthesis process can be adjusted to adjust the values "α", "β", and "γ" in the above composition formula (1).

The raw material powders are mixed well together, and then mixed, pulverized, and reacted together by mechanochemical milling. Alternatively, the raw material powders may be mixed together and then sintered in a vacuum or an inert atmosphere. The sintering is performed, for example, within a temperature range of 100°C to 800°C for 1 hour or longer. Thus, a lithium-containing fluoride having the composition described above is obtained.

In the lithium-containing fluoride, the structure of the crystal phase (crystal structure) can be determined by adjusting the method and conditions for reaction between the raw material powders.

### (Positive electrode active material)

The positive electrode active material 11 is, for example, a material having properties of occluding and releasing metal ions (e.g., lithium ions). Examples of the positive electrode active material 11 include a lithium-containing transition metal oxide, a transition metal fluoride, a polyanion material, a fluorinated polyanion material, a transition metal sulfide, a transition metal oxysulfide, and a transition metal oxynitride. Examples of the polyanion material and the fluorinated polyanion material include LiFePO₄, LiCoPO₄, Li₂CoPO₄F, Li₂MnSiO₄, and Li₂FeSiO₄. Examples of the lithium-containing transition metal oxide include Li(Ni,Co,Al)O₂, Li(Ni,Co,Mn)O₂, and LiCoO₂ each having a layered rock-salt structure. For example, in the case where the lithium-containing transition metal oxide is used as the positive electrode active material 11, it is possible to reduce the production cost of the positive electrode and enhance the average discharge voltage.

In the present disclosure, when an element in a formula is expressed as, for example, "(Ni,Co,Al)", this expression indicates at least one element selected from the group of elements in parentheses. That is, "(Ni,Co,Al)" is synonymous with "at least one selected from the group consisting of Ni, Co, and Al". The same applies to other elements.

The positive electrode active material 11 is, for example, particulate.

The median diameter of the positive electrode active material 11 may be 0.1 µm or more and 100 µm or less, or may be, for example, 0.5 µm or more and 10 µm or less.

In the present description, the "median diameter" means the particle diameter at a cumulative volume equal to 50% in the volumetric particle size distribution. The volumetric particle size distribution is measured with, for example, a laser diffraction analyzer or an image analyzer.

The positive electrode active material 11 may include lithium nickel cobalt aluminum oxide.

According to the above configuration, the energy density of a battery can be increased.

The positive electrode active material 11 may be Li(Ni,Co,Al)O₂.

Li(Ni,Co,Al)O₂ encompasses those including at least one additive element in addition to Li, Ni, Co, and Al. The additive element can be at least one or two or more elements selected from the group consisting of boron (B), sodium (Na), magnesium (Mg), silicon (Si), phosphorus (P), sulfur (S), potassium (K), calcium (Ca), titanium (Ti), vanadium (V), chromium (Cr), manganese (Mn), iron (Fe), copper (Cu), zinc (Zn), gallium (Ga), germanium (Ge), zirconium (Zr), niobium (Nb), molybdenum (Mo), indium (In), tin (Sn), tungsten (W), lanthanum (La), and cerium (Ce).

### <Method for producing coated active material>

The coated active material 100 of Embodiment 1 can be produced by, for example, the following method.

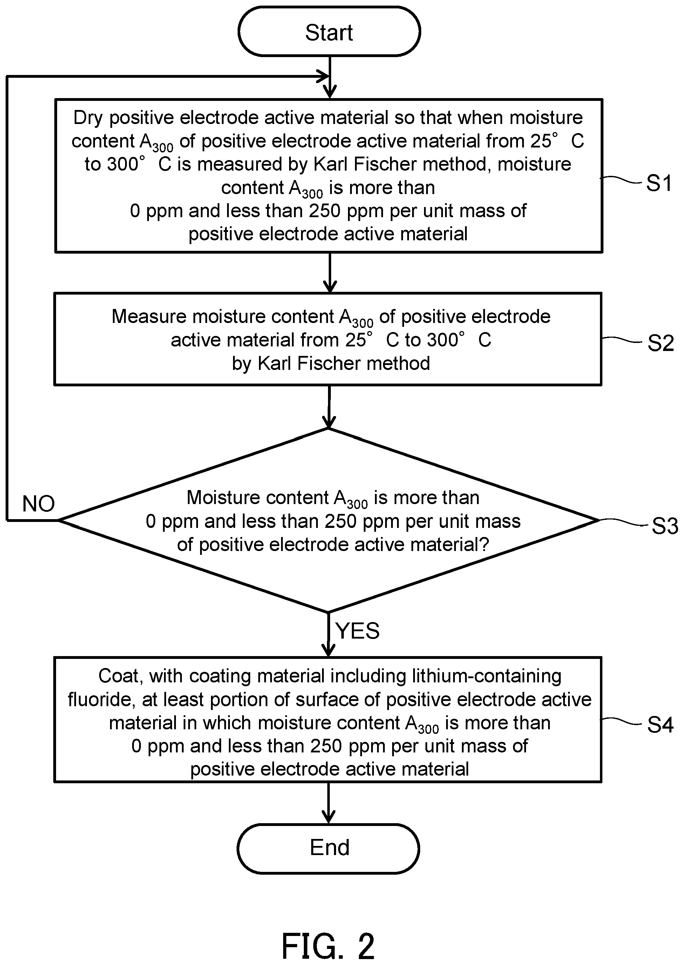

FIG. 2 is a flowchart showing a method for producing the coated active material 100. The method for producing the coated active material 100 includes: drying the positive electrode active material 11 so that when the moisture content A₃₀₀ of the positive electrode active material 11 from 25°C to 300°C is measured by the Karl Fischer method, the moisture content A₃₀₀ is more than 0 ppm and less than 250 ppm per unit mass of the positive electrode active material 11 (Step S1); and, after the drying, coating at least a portion of the surface of the positive electrode active material 11 with a coating material including a lithium-containing fluoride (Step S4).

First, the positive electrode active material 11 is dried so that when the moisture content A₃₀₀ of the positive electrode active material 11 from 25°C to 300°C is measured by the Karl Fischer method, the moisture content A₃₀₀ is more than 0 ppm and less than 250 ppm per unit mass of the positive electrode active material 11 (Step S1). Step S1 can reduce the moisture contained in the positive electrode active material 11, for example, physically adsorbed moisture and chemically bonded moisture, to the above range.

The drying temperature in Step S1 is not particularly limited. The drying temperature can be a temperature sufficient to reduce the moisture contained in the positive electrode active material 11. The drying temperature may be, for example, 120°C or higher and 700°C or lower. The drying temperature may be 200°C or higher and 700°C or lower. In the case where the drying temperature is 120°C or higher, it is possible to more effectively reduce, among the moisture contained in the positive electrode active material 11, chemically bonded moisture such as water of crystallization. In the case where the drying temperature is 700°C or lower, it is possible to suppress the occurrence of aggregation of the particles of the positive electrode active material 11 and the occurrence of oxygen deficiency.

The drying time in Step S1 is not particularly limited. The drying time can be a time sufficient to reduce the moisture contained in the positive electrode active material 11. The drying time may be, for example, about 5 hours to about 1 week.

Step S1 may be performed in a vacuum environment, a dry atmosphere adjusted to a dew point of -70°C, or an inert atmosphere. Step S1 may be performed in a vacuum environment. In the case where Step S1 is performed in a vacuum environment, the moisture contained in the positive electrode active material 11 can be efficiently reduced in a short time. A "vacuum environment" means an environment of a pressure lower than atmospheric pressure.

The device for performing Step S1 is not particularly limited. For example, a heater, a dryer, a hot air dryer, or an infrared dryer, equipped with a forced exhaust device, can be used.

After completion of Step S1, the moisture content A₃₀₀ of the positive electrode active material 11 from 25°C to 300°C may be measured by the Karl Fischer method described above (Step S2).

After completion of Step S2, a judgment may be made as to whether the moisture content A₃₀₀ is more than 0 ppm and less than 250 ppm per unit mass of the positive electrode active material 11 (Step S3). Steps S1 to S3 may be repeated until the moisture content A₃₀₀ satisfies more than 0 ppm and less than 250 ppm per unit mass of the positive electrode active material 11. In the case where the moisture content A₃₀₀ is more than 0 ppm and less than 250 ppm per unit mass of the positive electrode active material 11, Step S3 may be completed.

In Step S3, a judgment may be made as to whether the moisture content A₃₀₀ is more than 0 ppm and 200 ppm or less per unit mass of the positive electrode active material 11. In this case, Steps S1 to S3 may be repeated until the moisture content A₃₀₀ satisfies more than 0 ppm and 200 ppm or less per unit mass of the positive electrode active material. In the case where the moisture content A₃₀₀ is more than 0 ppm and 200 ppm or less per unit mass of the positive electrode active material, Step S3 may be completed.

In Step S3, a judgment may be made as to whether the moisture content A₃₀₀ is more than 0 ppm and less than 150 ppm per unit mass of the positive electrode active material 11. In this case, Steps S1 to S3 may be repeated until the moisture content A₃₀₀ satisfies more than 0 ppm and less than 150 ppm per unit mass of the positive electrode active material. In the case where the moisture content A₃₀₀ is more than 0 ppm and less than 150 ppm per unit mass of the positive electrode active material, Step S3 may be completed.

After the completion of Step S3, at least a portion of the surface of the positive electrode active material 11, in which the moisture content A₃₀₀ is more than 0 ppm and less than 250 ppm per unit mass of the positive electrode active material 11, is coated with a coating material including a lithium-containing fluoride (Step S4). Step S4 forms the coating layer 12 coating at least a portion of the surface of the positive electrode active material 11. Thus, the coated active material 100 is obtained.

Step S4 may be performed by a dry particle composing method. In the dry particle composing method, the positive electrode active material 11 and the coating material are mixed together in an appropriate blending ratio and the resultant mixture is subjected to a milling process to impart a mechanical energy to the mixture. For the milling process, a mixer such as a ball mill can be used. To suppress oxidation of the material, the milling process may be performed in a dry atmosphere and an inert atmosphere.

The process by the dry particle composing method may include stirring the mixture including the positive electrode active material 11 and the coating material while imparting a mechanical energy generated by impact, compression, and shear to the mixture. According to the dry particle composing method, the coated active material 100 can be efficiently produced.

The apparatus that can be used in Step S4 is not particularly limited, and is any apparatus capable of imparting a mechanical energy generated by impact, compression, shear, etc. to the mixture. Desirable examples of the apparatus include a ball mill and a compression shear type processing apparatus (particle composing machine), such as "MECHANO FUSION" (manufactured by Hosokawa Micron Corporation) or "NOBILTA" (manufactured by Hosokawa Micron Corporation). Among these, "MECHANO FUSION" and "NOBILTA" are more desirable, and "NOBILTA" is even more desirable.

"MECHANO FUSION" is a particle composing machine using a dry mechanical composing technology of imparting a high mechanical energy to a plurality of different material particles. MECHANO FUSION produces composite particles by imparting a mechanical energy generated by compression, shear, friction, etc. to powdery raw materials charged between the rotating vessel and the press head.

"NOBILTA" is a particle composing machine using a dry mechanical composing technology developed from the particle composing technology in order to perform composing using nanoparticles as the raw material. The dry mechanical composing technology is a technology of producing composite particles by imparting a mechanical energy generated by impact, compression, and shear to a plurality of raw material powders.

In "NOBILTA", inside a horizontal cylindrical mixing vessel, a rotor is disposed with a predetermined gap from the inner wall of the mixing vessel, and the rotor rotates at a high speed to repeat processing of forcibly passing raw material particles through the gap multiple times. This exerts the force of impact, compression, and shear on the mixture, and thus composite particles of the positive electrode active material and the coating material can be produced. The conditions such as the rotation speed of the rotor, the processing time, and the charge amount can be adjusted as appropriate.

In producing the coated active material 100 by the dry particle composing method, the internal temperature of the mixer rises in some cases. A rise in the internal temperature of the mixer can cause a portion of the moisture contained in the positive electrode active material 11 to appear on the surface. The moisture appearing on the surface and the lithium-containing fluoride included in the coating layer 12 react with each other, which can deteriorate the composition or crystallinity of the lithium-containing fluoride. The deterioration of the lithium-containing fluoride generates a resistance layer at the interface between the positive electrode active material 11 and the coating layer 12. This resistance layer increases the internal resistance of the battery during charge and discharge.

To suppress a rise in the internal temperature of the mixer, Step S4 may control the internal temperature of the mixer. In Step S4, the internal temperature of the mixer may be controlled to, for example, 70°C or lower.

According to the above production method, the moisture content A₃₀₀ of the positive electrode active material 11 from 25°C to 300°C can be controlled within the above range. This suppresses, in coating the surface of the positive electrode active material 11 with the coating material, deterioration of the coating layer 12 due to a reaction between the moisture contained in the positive electrode active material 11 and the lithium-containing fluoride included in the coating material. That is, generation of a resistance layer at the interface between the positive electrode active material 11 and the coating layer 12 due to deterioration of the coating layer 12 is suppressed. Therefore, the coated active material 100 produced by the above production method can reduce the output resistance of a battery.

### (Embodiment 2)

Embodiment 2 will be described below. The description overlapping that of Embodiment 1 will be omitted as appropriate.

### [Positive electrode material]

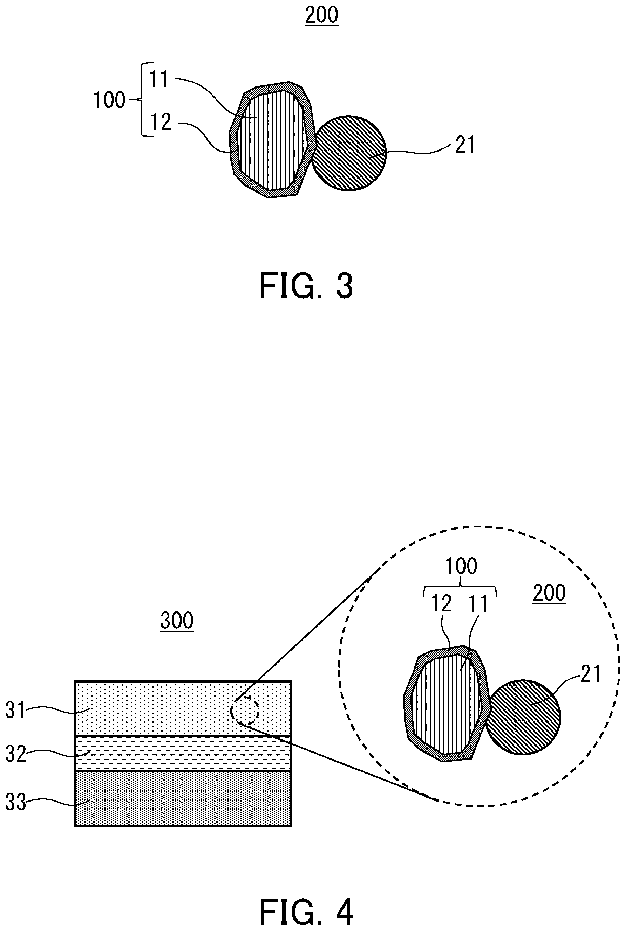

FIG. 3 is a cross-sectional view schematically showing the configuration of a positive electrode material 200 of Embodiment 2.

The positive electrode material 200 of Embodiment 2 includes the coated active material 100 of Embodiment 1 and the first solid electrolyte 21. The coated active material 100 can be produced by the production method described above. The first solid electrolyte 21 is, for example, particulate. The first solid electrolyte 21 can achieve a high ionic conductivity in the positive electrode material 200.

### (First solid electrolyte)

The first solid electrolyte 21 includes a solid electrolyte having a high ionic conductivity. The first solid electrolyte 21 may include a halide solid electrolyte. Halide solid electrolytes have a high ionic conductivity and an excellent high-potential stability. Furthermore, halide solid electrolytes have a low electronic conductivity and a high oxidation resistance, and consequently are less prone to oxidative decomposition caused by contact with the coated active material 100. Therefore, in the case where the first solid electrolyte 21 includes a halide solid electrolyte, the output characteristics of a battery can be enhanced.

The halide solid electrolyte can be, for example, Li₃(Ca,Y,Gd)X₆, Li₂MgX₄, Li₂FeX₄, Li(Al,Ga,In)X₄, Li₃(Al,Ga,In)X₆, or Lil. Here, the element X in these halide solid electrolytes is at least one selected from the group consisting of Cl, Br, and I.

The halide solid electrolyte may be free of sulfur.

The first solid electrolyte 21 may include a sulfide solid electrolyte. Sulfide solid electrolytes are excellent in ionic conductivity and flexibility. According to such a configuration, the output characteristics of a battery can be enhanced.

The sulfide solid electrolyte can be, for example, Li₂S-P₂S₅, Li₂S-SiS₂, Li₂S-B₂S₃, Li₂S-GeS₂, Li_{3.25}Ge_{0.25}P_{0.75}S₄, or Li₁₀GeP₂Si₂. To these, LiX, Li₂O, MO_{q}, LiₚMO_{q}, or the like may be added. Here, the element X in "LiX" is at least one element selected from the group consisting of F, Cl, Br, and I. The element M in "MO_{q}" and "LiₚMO_{q}" is at least one element selected from the group consisting of P, Si, Ge, B, Al, Ga, In, Fe, and Zn. The symbols p and q in "MO_{q}" and "LiₚMO_{q}" are each an independent natural number.

The first solid electrolyte 21 may be the sulfide solid electrolyte. That is, the first solid electrolyte 21 may consist of the sulfide solid electrolyte. "Consisting of a sulfide solid electrolyte" means that no material other than the sulfide solid electrolyte is intentionally added, except for unavoidable impurities. For example, the sulfide solid electrolyte may include lithium sulfide and phosphorus sulfide. For example, the sulfide solid electrolyte may be Li₂S-P₂S₅.

The first solid electrolyte 21 has a shape that is not particularly limited, and may be, for example, spherical, ellipsoidal, flaky, or fibrous. For example, the first solid electrolyte 21 may be particulate.

In the case where the first solid electrolyte 21 is particulate (e.g., spherical), the first solid electrolyte 21 may have a median diameter of 100 µm or less. In the case where the median diameter is 100 µm or less, the coated active material 100 and the first solid electrolyte 21 can form a favorable dispersion state in the positive electrode material 200. Therefore, the charge and discharge characteristics of a battery are enhanced. The first solid electrolyte 21 may have a median diameter of 10 µm or less.

The first solid electrolyte 21 may have a smaller median diameter than the coated active material 100 has. According to such a configuration, the coated active material 100 and the first solid electrolyte 21 can form a more favorable dispersion state in the positive electrode material 200.

The coated active material 100 may have a median diameter of 0.1 µm or more and 100 µm or less. In the case where the coated active material 100 has a median diameter of 0.1 µm or more, the coated active material 100 and the first solid electrolyte 21 can form a favorable dispersion state in the positive electrode material 200. Therefore, the charge and discharge characteristics of a battery are enhanced. Moreover, in the case where the coated active material 100 has a median diameter of 100 µm or less, the diffusion rate of lithium inside the positive electrode active material 11 is enhanced. Therefore, a battery can operate at a high output.

The coated active material 100 may have a larger median diameter than the first solid electrolyte 21 has. Even according to such a configuration, the coated active material 100 and the first solid electrolyte 21 can form a favorable dispersion state in the positive electrode material 200.

In the positive electrode material 200, the first solid electrolyte 21 and the coated active material 100 may be in contact with each other as shown in FIG. 3. In this case, the coating layer 12 and the first solid electrolyte 21 are also in contact with each other. The particles of the first solid electrolyte 21 may fill between the particles of the coated active material 100.

In the coated active material 100, the coating layer 12 may uniformly coat the positive electrode active material 11. In other words, the entire surface of the positive electrode active material 11 may be coated with the coating layer 12, so that the coated active material 100 is formed. The coating layer 12 suppresses direct contact between the positive electrode active material 11 and the first solid electrolyte 21, and thus suppresses generation of an oxide film due to oxidative decomposition of the first solid electrolyte 21. Therefore, according to such a configuration, the output resistance of a battery is further reduced.

In the coated active material 100, the coating layer 12 may coat only a portion of the surface of the positive electrode active material 11. In other words, a portion of the surface of the positive electrode active material 11 may be coated with the coating layer 12, so that the coated active material 100 is formed.

The positive electrode material 200 may include a plurality of the first solid electrolytes 21 and a plurality of the coated active materials 100.

The content of the first solid electrolyte 21 in the positive electrode material 200 and the content of the coated active material 100 in the positive electrode material 200 may be equal to or different from each other.

### <Method for producing positive electrode material>

The coated active material 100 and the first solid electrolyte 21 are mixed together to obtain the positive electrode material 200. The method for mixing together the coated active material 100 and the first solid electrolyte 21 is not particularly limited. For example, an implement such as a mortar may be used to mix together the coated active material 100 and the first solid electrolyte 21, or a mixer such as a ball mill may be used to mix together the coated active material 100 and the first solid electrolyte 21. The mixing ratio between the coated active material 100 and the first solid electrolyte 21 is not particularly limited.

### (Embodiment 3)

Embodiment 3 will be described below. The description overlapping those of Embodiments 1 and 2 will be omitted as appropriate.

FIG. 4 is a cross-sectional view schematically showing the configuration of a battery 300 of Embodiment 3.

The battery 300 of Embodiment 3 includes a positive electrode 31, an electrolyte layer 32, and a negative electrode 33. The electrolyte layer 32 is disposed between the positive electrode 31 and the negative electrode 33.

The positive electrode 31 includes the positive electrode material 200 of Embodiment 2. That is, the positive electrode 31 includes the coated active material 100 and the first solid electrolyte 21. The positive electrode 31 includes a material having properties of occluding and releasing metal ions (e.g., lithium ions).

According to the above configuration, the charge and discharge efficiency of the battery 300 can be enhanced.

In the ratio "v1:100 - v1" between the volume of the positive electrode active material 11 and the sum of the volumes of the coating material and the first solid electrolyte 21 in the positive electrode 31, 30 ≤ v1 ≤ 95 may be satisfied. Here, v1 represents the volume ratio of the positive electrode active material 11 based on 100 of the total volume of the positive electrode active material 11, the coating material, and the first solid electrolyte 21 included in the positive electrode 31. In the case where 30 ≤ v1 is satisfied, a sufficient energy density of the battery 300 is easily ensured. In the case where v1 ≤ 95 is satisfied, the battery 300 more easily operates at a high output.

The positive electrode 31 may have an average thickness of 10 µm or more and 500 µm or less. In the case where the positive electrode 31 has an average thickness of 10 µm or more, the energy density of the battery 300 is sufficiently ensured. In the case where the positive electrode 31 has an average thickness of 500 µm or less, the battery 300 can operate at a high output. The average thickness of the positive electrode 31 can be determined by, for example, measuring the thicknesses of the positive electrode 31 at 20 points randomly selected in a cross-sectional SEM image of the battery 300 and calculating the average value from the measured values.

The electrolyte layer 32 is a layer including an electrolyte. The electrolyte is, for example, a solid electrolyte. The solid electrolyte included in the electrolyte layer 32 is referred to as a second solid electrolyte. That is, the electrolyte layer 32 may include a second solid electrolyte.

The second solid electrolyte can be at least one selected from the group consisting of a halide solid electrolyte, a sulfide solid electrolyte, an oxide solid electrolyte, a polymer solid electrolyte, and a complex hydride solid electrolyte.

The second solid electrolyte may include a solid electrolyte having the same composition as the composition of the solid electrolyte included in the first solid electrolyte 21 of Embodiment 2.

In the case where the second solid electrolyte includes a halide solid electrolyte, the second solid electrolyte may include a halide solid electrolyte having the same composition as the composition of the halide solid electrolyte that may be included in the first solid electrolyte 21 of Embodiment 2. That is, the electrolyte layer 32 may include a halide solid electrolyte having the same composition as the composition of the halide solid electrolyte that may be included in the first solid electrolyte 21 of Embodiment 2 described above. According to such a configuration, the output characteristics of the battery can be further enhanced.

The second solid electrolyte may include a solid electrolyte having composition different from the composition of the solid electrolyte included in the first solid electrolyte 21 of Embodiment 2.

In the case where the second solid electrolyte includes a halide solid electrolyte, the second solid electrolyte may include a halide solid electrolyte having composition different from the composition of the halide solid electrolyte that may be included in the first solid electrolyte 21 of Embodiment 2. That is, the electrolyte layer 32 may include a halide solid electrolyte having composition different from the composition of the halide solid electrolyte that may be included in the first solid electrolyte 21 of Embodiment 2. According to such a configuration, the output characteristics of the battery 300 can be further enhanced.

The second solid electrolyte may include a sulfide solid electrolyte. The second solid electrolyte may include a sulfide solid electrolyte having the same composition as the composition of the sulfide solid electrolyte that may be included in the first solid electrolyte 21 of Embodiment 2. That is, the electrolyte layer 32 may include a sulfide solid electrolyte having the same composition as the composition of the sulfide solid electrolyte that may be included in the first solid electrolyte 21 of Embodiment 2.

According to the above configuration, since the electrolyte layer 32 includes the sulfide solid electrolyte having an excellent reduction stability, a low-potential negative electrode material such as graphite or metallic lithium can be used for the negative electrode 33. Therefore, the energy density of the battery 300 can be enhanced. Moreover, in the case where the electrolyte layer 32 includes a sulfide solid electrolyte having the same composition as the composition of the sulfide solid electrolyte that may be included in the first solid electrolyte 21 of Embodiment 2, the output characteristics of the battery 300 can be further enhanced.

The second solid electrolyte may include an oxide solid electrolyte. The oxide solid electrolyte can be, for example, a NASICON solid electrolyte material typified by LiTi₂(PO₄)₃ and element-substituted substances thereof, a (LaLi)TiO₃-based perovskite solid electrolyte material, a LISICON solid electrolyte material typified by Li₁₄ZnGe₄O₁₆, Li₄SiO₄, and LiGeO₄ and element-substituted substances thereof, a garnet solid electrolyte material typified by Li₇La₃Zr₂O₁₂ and element-substituted substances thereof, Li₃PO₄ and N-substituted substances thereof, or glass or glass ceramics based on a Li-B-O compound, such as LiBO₂ or Li₃BO₃, to which Li₂SO₄, Li₂CO₃, or the like is added.

The second solid electrolyte may include a polymer solid electrolyte. The polymer solid electrolyte can be, for example, a compound of a polymer compound and a lithium salt. The polymer compound may have an ethylene oxide structure. The polymer compound having an ethylene oxide structure can contain a large amount of a lithium salt. Consequently, the ionic conductivity can be further enhanced. The lithium salt can be LiPF₆, LiBF₄, LiSbF₆, LiAsF₆, LiSO₃CF₃, LiN(SO₂F)₂, LiN(SO₂CF₃)₂, LiN(SO₂C₂F₅)₂, LiN(SO₂CF₃)(SO₂C₄F₉), LiC(SO₂CF₃)₃, or the like. The lithium salts may be used alone or in combination.

The second solid electrolyte may include a complex hydride solid electrolyte. The complex hydride solid electrolyte can be, for example, LiBH₄-Lil or LiBH₄-P₂S₅.

The electrolyte layer 32 may include the second solid electrolyte as its main component. That is, the electrolyte layer 32 may include the second solid electrolyte in a mass proportion of 50% or more (i.e., 50 mass% or more) in the entire electrolyte layer 32.

According to the above configuration, the output characteristics of the battery 300 can be further enhanced.

The electrolyte layer 32 may include the second solid electrolyte in a mass proportion of 70% or more (i.e., 70 mass% or more) in the entire electrolyte layer 32.

According to the above configuration, the output characteristics of the battery 300 can be even further enhanced.

The electrolyte layer 32 may include the second solid electrolyte as its main component and further include unavoidable impurities, or a starting material for use in synthesizing the second solid electrolyte, a by-product, a decomposition product, etc.

The electrolyte layer 32 may include the second solid electrolyte in a mass proportion of 100% (i.e., 100 mass%) in the entire electrolyte layer 32, except for unavoidably incorporated impurities. That is, the electrolyte layer 32 may consist of the second solid electrolyte.

According to the above configuration, the output characteristics of the battery 300 can be further enhanced.

The electrolyte layer 32 may include, as the second solid electrolyte, two or more of the materials listed as the solid electrolyte. The two or more solid electrolytes are different in composition from each other. For example, the electrolyte layer 32 may include, as the second solid electrolyte, a halide solid electrolyte and a sulfide solid electrolyte.

The electrolyte layer 32 may have an average thickness of 1 µm or more and 300 µm or less. In the case where the electrolyte layer 32 has an average thickness of 1 µm or more, the positive electrode 31 and the negative electrode 33 are less prone to a short circuit. Moreover, in the case where the electrolyte layer 32 has an average thickness of 300 µm or less, the battery 300 easily operates at a high output. That is, an appropriate adjustment of the average thickness of the electrolyte layer 32 can ensure a sufficient safety of the battery 300 and operate the battery 300 at a high output. The average thickness of the electrolyte layer 32 can be determined by the method described for the average thickness of the positive electrode 31.

The negative electrode 33 includes a material having properties of occluding and releasing metal ions (e.g., lithium ions). The negative electrode 33 includes, for example, a negative electrode active material (e.g., negative electrode active material particles).

The negative electrode active material can be a metal material, a carbon material, an oxide, a nitride, a tin compound, a silicon compound, or the like. The metal material may be a simple substance of metal. The metal material may be an alloy. Examples of the metal material include lithium metal and a lithium alloy. Examples of the carbon material include natural graphite, coke, partially graphitized carbon, a carbon fiber, spherical carbon, artificial graphite, and amorphous carbon. Examples of the oxide include Li₄Ti₅O₁₂, LiTi₂O₄, and TiO₂. From the viewpoint of capacity density, silicon, tin, a silicon compound, or a tin compound can be suitably used.

The negative electrode 33 may include a solid electrolyte. A solid electrolyte that can be included in the negative electrode 33 is referred to as a third solid electrolyte. That is, the negative electrode 33 may include a third solid electrolyte. According to such a configuration, the lithium-ion conductivity inside the negative electrode 33 is enhanced, and consequently the battery 300 can operate at a high output. The third solid electrolyte that can be included in the negative electrode 33 can be any of the materials listed as examples of the second solid electrolyte of the electrolyte layer 32.

The negative electrode active material may have a larger median diameter than the third solid electrolyte included in the negative electrode 33 has. In this case, the negative electrode active material and the third solid electrolyte can form a favorable dispersion state.

In the ratio "v2:100 - v2" between the volume of the negative electrode active material and the volume of the third solid electrolyte in the negative electrode 33, 30 ≤ v2 ≤ 95 may be satisfied. Here, v2 represents the volume ratio of the negative electrode active material based on 100 of the total volume of the negative electrode active material and the third solid electrolyte included in the negative electrode 33. In the case where 30 ≤ v2 is satisfied, a sufficient energy density of the battery 300 is easily ensured. In the case where v2 ≤ 95 is satisfied, the battery 300 more easily operates at a high output.

The negative electrode 33 may have an average thickness of 10 µm or more and 500 µm or less. In the case where the negative electrode 33 has an average thickness of 10 µm or more, a sufficient energy density of the battery 300 is easily ensured. In the case where the negative electrode 33 has an average thickness of 500 µm or less, the battery 300 more easily operates at a high output. The average thickness of the negative electrode 33 can be determined by the method described for the average thickness of the positive electrode 31.

At least one selected from the group consisting of the positive electrode 31, the electrolyte layer 32, and the negative electrode 33 may include a binder for the purpose of enhancing the adhesion between the particles. The binder is used to enhance the binding properties of the materials for the electrodes. Examples of the binder include polyvinylidene fluoride, polytetrafluoroethylene, polyethylene, polypropylene, an aramid resin, a polyamide, a polyimide, a polyamideimide, polyacrylonitrile, a polyacrylic acid, polyacrylic acid methyl ester, polyacrylic acid ethyl ester, polyacrylic acid hexyl ester, a polymethacrylic acid, polymethacrylic acid methyl ester, polymethacrylic acid ethyl ester, polymethacrylic acid hexyl ester, polyvinyl acetate, polyvinylpyrrolidone, a polyether, a polyethersulfone, hexafluoropolypropylene, styrene-butadiene rubber, and carboxymethyl cellulose. Moreover, the binder can be a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, an acrylic acid, and hexadiene. Furthermore, the binder may be a mixture of two or more selected from these materials.

At least one selected from the group consisting of the positive electrode 31 and the negative electrode 33 may include a conductive additive for the purpose of enhancing the electronic conductivity. The conductive additive can be, for example, graphite, such as natural graphite or artificial graphite, carbon black, such as acetylene black or Ketjenblack, a conductive fiber, such as a carbon fiber or a metal fiber, fluorinated carbon, a metal powder, such as an aluminum powder, a conductive whisker, such as a zinc oxide whisker or a potassium titanate whisker, a conductive metal oxide, such as titanium oxide, or a conductive polymer compound, such as a polyaniline compound, a polypyrrole compound, or a polythiophene compound. In the case where a conductive carbon additive is used, cost reduction of the battery 300 can be achieved.

The battery 300 can be configured as a battery having any of various shapes such as a coin type, a cylindrical type, a prismatic type, a sheet type, a button type, a flat type, and a stacked type.

The battery 300 can be produced by, for example, the following method. The positive electrode material 200 of Embodiment 2, the material for forming the electrolyte layer 32, and the material for forming the negative electrode 33 are each prepared. A stack composed of the positive electrode 31, the electrolyte layer 32, and the negative electrode 33 that are disposed in this order is produced by a known method. Thus, the battery 300 is obtained.

### Examples

The present disclosure will be described below in detail with reference to examples and reference examples. The present invention is not limited to the following examples.

### <<Example 1>>

### [Positive electrode active material]

The positive electrode active material used was Li(Ni,Co,Al)O₂ (hereinafter referred to as NCA) having a median diameter of 5 µm.

### <Drying of positive electrode active material>

Into a dryer equipped with a forced exhaust device and installed in a dry environment controlled to a dew point of -60°C or lower, NCA was put. NCA was dried for 7 days in a state in which the internal temperature of the dryer was maintained at 200°C and the internal pressure of the dryer was reduced to a degree of vacuum of 1 kPa or less. Thus, a positive electrode active material of Example 1 was obtained.

### [Production of coating material (lithium-containing fluoride)]

In a glove box in an argon atmosphere controlled to a dew point of -60°C or lower and an oxygen value of 5 ppm or less, LiF, AlF₃, and TiF₄ as raw material powders were weighed in a molar ratio of LiF:AlF₃:TiF₄ = 2.7:0.7:0.3. These raw material powders were mixed together in an agate mortar to obtain a mixture. Next, the mixture was subjected to a milling process with a planetary ball mill (Type P-7 manufactured by Fritsch GmbH) at 500 rpm for 12 hours. Thus, a compound represented by the composition formula Li_{2.7}Ti_{0.3}Al_{0.7}F₆ (hereinafter referred to as LTAF) was obtained. The compound and an appropriate amount of a solvent were mixed together and the resultant mixture was subjected to a milling process with the planetary ball mill at 200 rpm for 20 minutes. The solvent was then removed by drying. Thus, a LTAF powder was obtained as the coating material (lithium-containing fluoride). The LTAF powder had an average particle diameter of 0.5 µm.

The average particle diameter of LTAF was calculated from a top-view SEM image of LTAF obtained with a scanning electron microscope (3D Real Surface View Microscope, VE-8800 manufactured by Keyence Corporation, magnification of 5000 times). Specifically, in a top-view SEM image of LTAF, 50 particles were randomly selected and the average value of their equivalent circle diameters was calculated as the average particle diameter.

### <Production of coated active material>

Coating of NCA with LTAF was performed with a particle composing machine (NOBILTA, NOB-MINI manufactured by Hosokawa Micron Corporation). Into the vessel of NOB-MINI, 48.5 g of NCA and 1.5 g of LTAF were put. NCA and LTAF were composed under the conditions of a rotation speed of 6000 rpm, an operation time of 60 minutes, and a power value of 550 W to 740 W. Thus, a coated active material of Example 1 was obtained. The proportion of the volume of LTAF in the total of the volume of NCA and the volume of LTAF was 4.6%.

### «Example 2»

In drying the positive electrode active material, the internal temperature of the dryer was maintained at 250°C. In the same manner as in Example 1 except for the above, a positive electrode active material and a coated active material of Example 2 were obtained.

### «Example 3»

### [Positive electrode active material]

The positive electrode active material of Example 3 used was the positive electrode active material of Example 1.

### [Production of coating material (lithium-containing fluoride)]

In a glove box in an argon atmosphere controlled to a dew point of -60°C or lower and an oxygen value of 5 ppm or less, LiF, AlF₃, and ZrF₄ as raw material powders were weighed in a molar ratio of LiF:AlF₃:ZrF₄ = 2.8:0.8:0.2. These raw material powders were mixed together in an agate mortar to obtain a mixture. The mixture and an appropriate amount of a solvent were mixed together and the resultant mixture was subjected to a milling process with a planetary ball mill (Type P-7 manufactured by Fritsch GmbH) at 500 rpm for 12 hours. The solvent was then removed by drying. Thus, a powder represented by the composition formula Li_{2.8}Zr_{0.2}Al_{0.8}F₆ (hereinafter referred to as LZAF) was obtained as the coating material (lithium-containing fluoride). The LZAF powder had an average particle diameter of 0.5 µm. The average particle diameter of LZAF was determined by the same method as that for the average particle diameter of the LTAF powder of Example 1.

### <Production of coated active material>

Coating of NCA with LZAF was performed with NOB-MINI as in Example 1. Into the vessel of NOB-MINI, 48.5 g of NCA and 1.5 g of LZAF were put. NCA and LZAF were composed under the conditions of a rotation speed of 5600 rpm, an operation time of 60 minutes, and a power value of 550 W to 740 W. Thus, a coated active material of Example 3 was obtained. The proportion of the volume of LZAF in the total of the volume of NCA and the volume of LZAF was 4.6%.

### <<Reference Example 1>>

In drying the positive electrode active material, the internal temperature of the dryer was maintained at 100°C. In the same manner as in Example 1 except for the above, a positive electrode active material and a coated active material of Reference Example 1 were obtained.

### <<Reference Example 2»

In drying the positive electrode active material, the internal temperature of the dryer was maintained at 150°C. In the same manner as in Example 1 except for the above, a positive electrode active material and a coated active material of Reference Example 2 were obtained.

### <<Reference Example 3»

In drying the positive electrode active material, the internal temperature of the dryer was maintained at 100°C. In the same manner as in Example 3 except for the above, a positive electrode active material and a coated active material of Reference Example 3 were obtained.

### (Measurement of moisture content of positive electrode active material)

For each of the positive electrode active materials before coating of the examples and the reference examples, the moisture content A₁₈₀ of the positive electrode active material from 25°C to 180°C and the moisture content A₃₀₀ of the positive electrode active material from 25°C to 300°C were determined by the Karl Fischer method described above. For the measurement of the moisture content of the positive electrode active material, a Karl Fischer apparatus (CA-310 manufactured by Nittoseiko Analytech Co., Ltd.) was used. The moisture content A₁₈₀ calculated was divided by the total mass of the positive electrode active material used for the measurement. Thus, the moisture content A₁₈₀ per unit mass of the positive electrode active material was calculated. The moisture content A₃₀₀ calculated was divided by the total mass of the positive electrode active material used for the measurement. Thus, the moisture content A₃₀₀ per unit mass of the positive electrode active material was calculated. The results are shown in Table 1.

### [Production of secondary battery]

The following processes were performed for each of the coated active materials of the examples and the reference examples.

In a glove box in an argon atmosphere controlled to a dew point of -60°C or lower and an oxygen value of 5 volppm or less, the coated active material and Li₂S-P₂S₅ as the first solid electrolyte were weighed so that the volume ratio of the positive electrode active material to the sum of the coating material (lithium-containing fluoride) and the first solid electrolyte was 75:25. Furthermore, a conductive additive (VGCF-H manufactured by SHOWA DENKO K.K.) was weighed so as to have 1.5 mass% to the mass of the positive electrode active material. These were mixed together in an agate mortar to produce a positive electrode material for each of the examples and the reference examples. "VGCF" is a registered trademark of SHOWA DENKO K.K.

Into an insulating outer cylinder, 60 mg of Li₂S-P₂S₅ as the second solid electrolyte was put and pressure-molded at a pressure of 80 MPa. Thus, an electrolyte layer was obtained. Next, 15.6 mg of the positive electrode material in terms of the mass of the positive electrode active material was put into the insulating outer cylinder and pressure-molded at a pressure of 720 MPa. Thus, a positive electrode layer was obtained. Next, metallic Li (having a thickness of 200 µm) was disposed on the electrolyte layer on the negative electrode side. A stack composed of the positive electrode layer, the electrolyte layer, and the metallic Li was pressure-molded at a pressure of 80 MPa. Thus, a negative electrode layer was obtained. Next, stainless steel current collectors were placed on the top and the bottom of the stack, and current collector leads were attached to the current collectors. Finally, an insulating ferrule was used to block the inside of the insulating outer cylinder from the outside air atmosphere and hermetically seal the insulating outer cylinder. Thus, a secondary battery was produced. The insulating outer cylinder used in the present examples had an inner diameter of 9.5 mm, and the electrode had a projected area of 0.71 cm².

### (Evaluation of output resistance)

Evaluation of output resistance was performed for each of the secondary batteries of the examples and the reference examples under the following conditions.

The secondary battery was placed in a thermostatic chamber at 25°C. Constant-current charge was performed at a current value of 319 µA equivalent to 0.1 C rate (10-hour rate) relative to the theoretical capacity of the battery. The charge was terminated at a voltage of 4.3 V (Li/Li⁺ reference voltage). Next, constant-voltage charge was performed at a voltage of 4.3 V. The charge was terminated when the current value fell below 31.9 µA equivalent to 0.01 C rate. After a 20-minute pause, constant-current discharge was performed at a current value of 319 µA also equivalent to 0.1 C rate. The discharge was terminated at a voltage of 3.62 V (Li/Li⁺ reference voltage). Next, constant-voltage discharge was performed at a voltage of 3.62 V. The discharge was terminated when the current value fell below 31.9 µA equivalent to 0.01 C rate. After a 10-minute pause, discharge was performed at 4.63 mA equivalent to 1.45 C rate for 10 seconds. Thus, from the amount of voltage drop, the resistance value was determined by Ohm's law (R = ΔV/0.00463), and the resistance value determined was multiplied by the projected area of the electrode to calculate the output resistance. Thus, the output resistance of the secondary battery was determined. The results are shown in Table 1.

**[Table 1]**

| | Drying temperature [°C] | Coating material (lithium-containing fluoride) | Moisture content A₁₈₀ (from 25°C to 180°C) [ppm] | Moisture content A₃₀₀ (from 25°C to 300°C) [ppm] | Output resistance [ohm•cm²] |
|---|---|---|---|---|---|
| Example 1 | 200 | LTAF | 12 | 126 | 33.6 |
| Example 2 | 250 | LTAF | 17 | 49 | 33.9 |
| Example 3 | 200 | LZAF | 12 | 126 | 36.8 |
| Reference Example 1 | 100 | LTAF | 27 | 273 | 36.9 |
| Reference Example 2 | 150 | LTAF | 24 | 283 | 37.7 |
| Reference Example 3 | 100 | LZAF | 27 | 273 | 37.4 |

### «Consideration»

In Examples 1 to 2 and Reference Examples 1 to 2, the same coating material (LTAF) was used to form the coating layer. However, Examples 1 to 2 with drying of the positive electrode active material before formation of the coating layer each exhibited a lower output resistance of the battery than Reference Examples 1 to 2 without drying of the positive electrode active material before formation of the coating layer. In Examples 3 and Reference Examples 3, the same coating material (LZAF) was used to form the coating layer. However, Example 3 with drying of the positive electrode active material before formation of the coating layer exhibited a lower output resistance of the battery than Reference Example 3 without drying of the positive electrode active material before formation of the coating layer. In Examples 1 to 3, the moisture content A₃₀₀ of the positive electrode active material from 25°C to 300°C was more than 0 ppm and less than 250 ppm per unit mass of the positive electrode active material. Moreover, in Examples 1 to 3, the moisture content A₁₈₀ of the positive electrode active material from 25°C to 180°C was more than 0 ppm and less than 20 ppm per unit mass of the positive electrode active material.

Using, as the lithium-containing fluoride included in the coating material, even a lithium-containing fluoride other than LTAF or LZAF, such as Li₂ZrF₆, Li₃ZrF₇, Li₄ZrF₈, Li₃AlF₆, or Li₂TiF₆, is inferred to have the same tendency as that in the results of the present examples. This is because all these lithium-containing fluorides each consist of Li, F, and at least one selected from the group consisting of Zr, Ti, and Al as in LTAF and LZAF, and are consequently regarded as having properties similar to those of LTAF and LZAF.

Using, as the positive electrode active material, even a material other than NCA, such as lithium cobalt oxide (LiCoO₂), obviously has the same tendency as that in the results of the present examples.

### INDUSTRIAL APPLICABILITY

The battery of the present disclosure can be used as, for example, an all-solid-state lithium secondary battery.

## Claims

1. A coated active material comprising:
a positive electrode active material; and
a coating layer coating at least a portion of a surface of the positive electrode active material, wherein
the coating layer includes a lithium-containing fluoride, and
when a moisture content of the positive electrode active material from 25°C to 300°C is measured by a Karl Fischer method, the moisture content is more than 0 ppm and less than 250 ppm per unit mass of the positive electrode active material.

2. The coated active material according to claim 1, wherein
the lithium-containing fluoride includes Li, Me, Al, and F, and
the Me is at least one selected from the group consisting of Ti and Zr.

3. The coated active material according to claim 1 or 2, wherein
the lithium-containing fluoride is represented by the following composition formula (1)
Li_{α}Me_{β}Al_{γ}F₆ ... Formula (1),
the Me is at least one selected from the group consisting of Ti and Zr, and
the α, the β, and the γ satisfy α + 4β + 3γ = 6 and γ > 0.

4. The coated active material according to claim 3, wherein
the γ satisfies 0.5 ≤ γ < 1.

5. The coated active material according to claim 3, wherein
the α, the β, and the γ satisfy 2.5 ≤ α ≤ 2.9, 0.1 ≤ β ≤ 0.5, and 0.5 ≤ γ ≤ 0.9.

6. The coated active material according to any one of claims 1 to 5, wherein
the positive electrode active material includes lithium nickel cobalt aluminum oxide.

7. A method for producing a coated active material, the method comprising:
drying a positive electrode active material so that when a moisture content of the positive electrode active material from 25°C to 300°C is measured by a Karl Fischer method, the moisture content is more than 0 ppm and less than 250 ppm per unit mass of the positive electrode active material; and
after the drying, coating at least a portion of a surface of the positive electrode active material with a coating material including a lithium-containing fluoride.

8. The method according to claim 7, comprising
between the drying and the coating, measuring the moisture content of the positive electrode active material from 25°C to 300°C by the Karl Fischer method.

9. The method according to claim 8, comprising
between the measuring and the coating, judging whether the moisture content is more than 0 ppm and less than 250 ppm per unit mass of the positive electrode active material.

10. The method according to any one of claims 7 to 9, wherein
the coating is performed by a dry particle composing method, and
the dry particle composing method includes imparting a mechanical energy to a mixture of the positive electrode active material and the coating material, the mechanical energy being generated by impact, compression, and shear.

11. A positive electrode material comprising:
the coated active material according to any one of claims 1 to 6; and
a first solid electrolyte.

12. The positive electrode material according to claim 11, wherein
the first solid electrolyte includes a halide solid electrolyte.

13. The positive electrode material according to claim 11 or 12, wherein
the first solid electrolyte includes a sulfide solid electrolyte.

14. A battery comprising:
a positive electrode including the positive electrode material according to any one of claims 11 to 13;
a negative electrode; and
an electrolyte layer provided between the positive electrode and the negative electrode.

15. The battery according to claim 14, wherein
the electrolyte layer includes a second solid electrolyte, and
the second solid electrolyte includes a halide solid electrolyte having the same composition as composition of a solid electrolyte included in the first solid electrolyte.

16. The battery according to claim 14 or 15, wherein
the electrolyte layer includes a second solid electrolyte, and
the second solid electrolyte includes a halide solid electrolyte having composition different from composition of a solid electrolyte included in the first solid electrolyte.

17. The battery according to any one of claims 14 to 16, wherein
the electrolyte layer includes a second solid electrolyte, and
the second solid electrolyte includes a sulfide solid electrolyte.
